# EUROPÄISCHE PATENTSCHRIFT

(11) **EP 2 347 218 B1**
(45) Veröffentlichungstag und Bekanntmachung des Hinweises auf die Patenterteilung: **02.01.2013**
(21) Anmeldenummer: 09753089.3
(22) Anmeldetag: 11.11.2009
(51) Int. Cl.: G01B 21/04, B64C 1/06, B64F 5/00

(54) **STRUKTURELEMENT FÜR EINE RUMPFZELLENSTRUKTUR EINES FLUGZEUGS MIT MINDESTENS EINER POSITIONIERHILFE**
STRUCTURAL ELEMENT FOR A FUSELAGE CELL STRUCTURE OF AN AIRCRAFT, COMPRISING AT LEAST ONE POSITIONING AID
ELEMENT DE STRUCTURE DESTINE A UNE STRUCTURE DE FUSELAGE D'UN AVION ET COMPORTANT AU MOINS UNE AIDE AU POSITIONNEMENT

(30) Priorität: 21.11.2008 DE 102008043977; 21.11.2008 US 116807 P
(43) Veröffentlichungstag der Anmeldung: 27.07.2011
(73) Patentinhaber: Airbus Operations GmbH, 21129 Hamburg (DE)
(72) Erfinder: ARNOLD, Ralph, 26127 Oldenburg (DE)
(74) Vertreter: Isarpatent
(86) Internationale Anmeldenummer: PCT/EP2009/065001
(87) Internationale Veröffentlichungsnummer: WO 2010/057817

(56) Entgegenhaltungen:
- EP-A1- 2 112 463
- EP-A2- 0 957 335
- DE-A1-102006 019 917
- US-A1- 2002 171 821

## Beschreibung

Die Erfindung betrifft ein Strukturelemente für eine Rumpfzellenstruktur eines Flugzeugs, insbesondere ein Stringerprofil oder ein Ringspantsegment, wobei das Strukturelement mit einem Verbundmaterial, insbesondere mit einem kohlefaserverstärkten Epoxidharz, gebildet ist.

Im modernen Flugzeugbau wird ein zunehmender Einsatz von Verbundbauteilen angestrebt, wobei die Verbundbauteile bevorzugt mit kohlefaserverstärkten Epoxidharzen hergestellt werden. Die Herstellung von derartigen Verbundbauteilen ist jedoch mit fertigungsbedingt in aller Regel unvermeidbaren und zudem nicht reproduzierbaren Maßabweichungen verbunden. Rumpfsektionen aus Verbundmaterialien werden oftmals in der so genannten Mehrschalenbauweise durch das Zusammenfügen von mindestens zwei Schalenbauteilen gebildet. Zur Schaffung einer vollständigen Flugzeugrumpfzelle wird anschließend eine Vielzahl von Rumpfsektionen unter Schaffung von Quernähten zu einer vollständigen Flugzeugrumpfzelle zusammengefügt.

Die Schalenbauteile selbst werden unter anderem durch zumindest eindimensional gekrümmte Hautfelder gebildet, die mit quer zur Flugzeuglängsachse verlaufenden Spantsegmenten sowie mit weiteren Strukturelementen, insbesondere mit Stringern, ausgesteift werden. Aufgrund der vorstehend erwähnten, unvermeidbaren Toleranzabweichungen bei der Fertigung von CFK-Bauteilen müssen beispielsweise die Stringer vor dem Zusammenfügen mit dem Hautfeld in nachfolgenden Prozessschritten mit hoher Genauigkeit vermessen und anschließend auf dem Hautfeld positioniert und ausgerichtet werden. Hierdurch entsteht bei der Fertigung von Schalenbauteilen ein erheblicher Arbeitsaufwand.

Dokument US2002/0171821, das den nächstliegenden Stand der Technik darstellt, offenbart ein solcher Prozess.

Aufgabe der Erfindung ist es daher, die Herstellung von Schalenbauteilen, insbesondere die Ausrichtung von Strukturelementen, wie zum Beispiel Stringern und/oder Spantsegmenten auf dem Hautfeld des Schalenbauteils, zu vereinfachen und nach dem Fügen der Einzelkomponenten, zum Beispiel in der Form von Rumpfschalen, eine erleichterte Vermessung einer ganzen Sektion zu ermöglichen. Diese Aufgabe wird durch ein Strukturelement mit den Merkmalen des Patentanspruchs 1 gelöst.

Dadurch, dass das Strukturelement mindestens eine Positionierhilfe zur Positionsbestimmung mit einem Messsystem aufweist, wird die räumliche Ausrichtung eines mit der Positionierhilfe ausgestatteten Strukturelementes in Relation zu einem weiteren Bauteil, bei dem es sich zum Beispiel um ein Hautfeld eines Schalenbauteils handelt, erheblich vereinfacht. Darüber hinaus wird die absolute Genauigkeit der räumlichen Ausrichtung des Strukturelements in Bezug auf das zweite Bauteil signifikant verbessert.

Eine Weiterentwicklung des Strukturelements sieht vor, dass das Messsystem ein Lasermesssystem und/oder taktiles Messsystem ist.

Der Einsatz eines Lasermesssystems ermöglicht eine berührungslose Messung mit einer hohen Messgenauigkeit, solange eine Entfernung zwischen dem Lasermesssystem und dem erfindungsgemäßen Strukturelement nicht zu groß wird.

Der Einsatz eines taktilen Messsystems ermöglicht insbesondere bei größeren Abmessungen der einzumessenden Bauteile im Vergleich zu den üblichen Lasermesssystemen eine höhere Messgenauigkeit. Hierbei stellt die Positionierhilfe einen definierten Referenzpunkt für das taktile Messsystem dar, um zu gewährleisten, dass bei einer Vermessung immer exakt die gleiche Messposition herangezogen wird.

Nach einer weiteren vorteilhaften Fortbildung des Strukturelements ist vorgesehen, dass die Positionierhilfe mit einem Ziel, insbesondere mit einem Reflektor, zur Positionsbestimmung mit dem Lasermesssystem, verbindbar ist.

Hierdurch kann die Lage eines erfindungsgemäß mit mindestens einer integral ausgebildeten Positionierhilfe versehenen Strukturelements mittels bekannter Lasermesssysteme berührungslos in Bezug zum umgebenden Raum (Messsystem) und/oder in Relation zu einem weiteren Bauteil mit hoher Genauigkeit erfasst werden. Um ausreichend genaue Positionsangaben zu erzielen, darf eine Entfernung zwischen dem Lasermesssystem und dem einzumessenden Bauteil nicht zu groß werden.

Die mindestens eine Positionierhilfe ist gattungsgemäß einstückig zum Strukturelement ausgebildet.

In Folge der integralen Ausbildung der Positionierhilfe zum Strukturelement werden zusätzliche Messfehler, die sich beispielsweise durch ein nachträgliches Aufbringen einer Positionierhilfe auf das Verstärkungsprofil ergeben würden, vollständig eliminiert.

Nach Maßgabe einer vorteilhaften Weiterentwicklung des Strukturelements ist vorgesehen, dass die mindestens eine Positionierhilfe an einer räumlich definierten Position am Strukturelement ausgebildet ist.

Das erfindungsgemäß ausgebildete Strukturelement kann beispielsweise im bekannten so genannten RTM-Verfahren ("Resin-Transfer-Molding-Verfahren") hergestellt werden. Hierbei wird eine vorgeformte Verstärkungsfaseranordnung in ein zum Beispiel zweiteiliges Formwerkzeug eingelegt und anschließend unter Anwendung von Druck und/oder Temperatur mit einem aushärtbaren Kunststoffmaterial, insbesondere einem Zweikomponenten-Epoxidharz, vollständig infiltriert. Als Verstärkungsfaseranordnung kommen in aller Regel Kohlefasern zum Einsatz, die in einer Vielzahl von übereinander geschichteten Lagen bevorzugt kraftflussoptimiert verlaufen. Die räumliche Gestalt des herzustellenden Bauteils wird beim RTM-Prozess durch das Formwerkzeug mit hoher Genauigkeit vorgegeben, wodurch jedoch Toleranzabweichungen aufgrund von thermisch bedingten Schrumpfungserscheinungen nicht ausgeschlossen werden können. Es ist möglich, die erfindungsgemäße Positionierhilfe durch sämtliche Verfahren zu erzeugen, die auf einer Form als formgebendes Werkzeug basieren. Die am Strukturelement vorgesehene Positionierhilfe kann zum Beispiel durch eine kleine Ausnehmung bzw. eine kleine Vertiefung im Formwerkzeug einstückig zum übrigen Strukturelement - ähnlich einem Spritzgrat bzw. einem Spritzast in der Spritzgießtechnik - während des Herstellungsprozesses des Strukturelements gleich mit ausgebildet werden. Ein separater Prozessschritt zur Schaffung der Positionierhilfe ist daher entbehrlich. Da die Positionierhilfe bereits während des Herstellungsprozesses des Strukturelements an einer räumlich exakt definierten Position, zum Beispiel im Bereich einer Mittellinie eines Stringerprofils, mit ausgebildet wird, wird eine spätere Vermessung der räumlichen Lage des Verstärkungsprofils vereinfacht und zudem eine Einmessung der räumlichen Lage des Strukturelements mit extrem hoher Genauigkeit ermöglicht. Die exakte räumliche Lage der Positionierhilfe kann aufgrund der bekannten CAD-Daten des Formwerkzeugs mit hoher Präzision ermittelt werden.

Eine weitere vorteilhafte Ausgestaltung der Erfindung sieht vor, dass die mindestens eine Positionierhilfe rein mechanisch, insbesondere durch Abschleifen, Abraspeln, Abfräsen, Abbrechen, Abschneiden oder eine beliebige Kombination hiervon vom Strukturelement abtrennbar ist.

Hierdurch kann die Positionierhilfe nach erfolgter Einmessung auf einfache Art und Weise wieder vom Strukturelement entfernt werden, um nachfolgende Fertigungsschritte nicht zu beeinträchtigen. Das Abbrechen oder Abscheren der Positionierhilfe kann beispielsweise durch das Vorsehen einer kleinen Sollbruchstelle weiter vereinfacht und hierdurch an definierter Stelle vollzogen werden. Für das korrekte Einmessen eines Bauteils im dreidimensionalen Raum sind stets mindestens drei Messstellen, das heißt mindestens drei Positionierhilfen notwendig.

Eine weitere Fortentwicklung des Strukturelements sieht vor, dass das Lasermesssystem insbesondere ein Lasertracker ist.

Der Einsatz eines Lasertrackers erlaubt die Bestimmung einer absoluten Position eines stationären oder bewegten Objekts im Raum in Bezug auf den Aufstellungsort des Lasertrackers. Voraussetzung hierfür ist, dass am Objekt ein geeigneter Reflektor zum Zurückstrahlen der vom Lasertracker ausgesandten Laserstrahlung angeordnet ist. Der Reflektor wird mittels der erfindungsgemäßen Positionierhilfe in einer bereits aus den Konstruktions-CAD-Daten exakt vordefinierten räumlichen und damit bekannten Position auf dem Strukturelement, bei dem es sich insbesondere um einen Stringer, einen Querträger oder ein Spantsegment handelt, positioniert. Diese bekannten räumlichen Positionen dienen als Sollwerte bzw. als Vorgabe für die Vermessung der relativen Lage aller Strukturkomponenten zueinander. Durch das Aufstecken bzw. das auf andere Art und Weise erfolgende Anordnen des Reflektors auf der Positionierhilfe lässt sich die räumliche Position des Strukturelements mittels des Lasertrackers auf bis zu 1/500 mm genau bestimmen.

Weitere vorteilhafte Ausgestaltungen des Strukturelements sind in den weiteren Patentansprüchen dargelegt.

In der Zeichnung zeigt
- **Fig. 1**: ein Ausführungsbeispiel eines erfindungsgemäßen Strukturelements in einer perspektivischen Ansicht,
- **Fig. 2**: eine vergrößerte Vorderansicht des Strukturelements aus Fig. 1 mit aufgestecktem Reflektor für ein Lasermesssystem, und
- **Fig. 3**: eine perspektivische Ansicht des auf einem Bauteil befindlichen Strukturelements nach Fig. 2 bei der Positionserfassung mittels eines taktilen Messsystems.

In der Zeichnung weisen dieselben konstruktiven Elemente jeweils dieselbe Bezugsziffer auf.

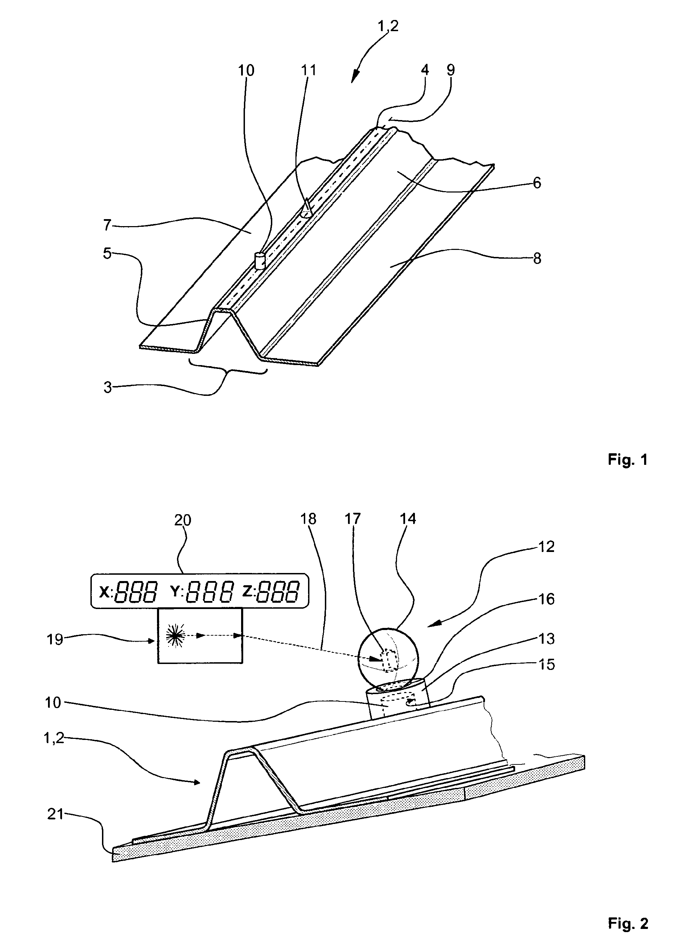

Die **Fig. 1** zeigt als ein Ausführungsbeispiel eines erfindungsgemäßen Strukturelements 1 ein so genanntes Ω-Stringerprofil 2. Das Stringerprofil 2 verfügt über einen Mittelabschnitt 3 mit einer in etwa trapezförmigen Querschnittsgeometrie. Der Mittelabschnitt 3 verfügt über eine horizontale Deckfläche 4, an die beidseitig zwei geneigte Seitenflächen 5,6 anschließen. Die Seitenflächen 5,6 gehen schließlich jeweils in zwei horizontal verlaufende Flansche 7,8 über. Im Bereich einer Mittellinie 9 des Stringerprofils 2 sind hintereinander versetzt zwei Positionierhilfen 10,11 mit einer jeweils anderen geometrischen Gestalt angeordnet.

Das Stringerprofil 2 kann zum Beispiel mittels des RTM-Prozesses mit einem kohlefaserarmierten Epoxidharz hergestellt werden. Die Positionierhilfen 10,11 weisen im Gegensatz zum übrigen Stringerprofil 2 keine Faserarmierung auf, sondern bestehen bevorzugt ausschließlich aus dem Harz, das auch für die Schaffung der Harzmatrix des Stringerprofils 2 zur Einbettung der Kohlefasern Verwendung findet. Das RTM-Verfahren findet bevorzugt für Spante Anwendung. Stringerprofile und andere Strukturelemente werden im Allgemeinen in einer Form mit einem Ober- und einem Unterwerkzeug in einem Heiß-Umform-Prozess (so genanntes "Hot-Forming") oder durch kaltes Umformen in einem solchen Werkzeug erzeugt. Beim anschließenden Autoklavieren verringert sich die Viskosität des zur Bildung des Strukturelements eingesetzten Harzsystems und schafft so im Zuge des Aushärtungsvorgangs in Verbindung mit entsprechenden Ausnehmungen in den Werkzeugen und in Verbindung mit dem latent vorhandenen Harzüberschuss die Positionierhilfen an den vorgesehenen Stellen.

Bei der Erzeugung der Bauteile besteht in der Matrix in der Regel ein Harzüberschuss, der für die integrale Ausbildung der Positionierhilfe mitgenutzt wird. Die Ausbildung der Positionierhilfen 10,11 erfolgt während der Durchführung des RTM-Prozesses. Zu diesem Zweck ist es lediglich erforderlich, die benutzten Formwerkzeuge mit einer Vertiefung zu versehen, deren Oberflächengeometrie der gewünschten späteren Form der Positionierhilfen 10,11 entspricht. Im gezeigten Ausführungsbeispiel der Fig. 1 weist die vordere Positionierhilfe 10 die räumliche Gestalt eines Zylinders auf, während die hinten liegende Positionierhilfe 11 kegelförmig ausgestaltet ist. Auf die Positionierhilfen 10,11 kann ein Reflektor im Idealfall spielfrei aufgesteckt werden, der in Verbindung mit einem so genannten Lasertracker (vgl. Fig. 2) eine hoch genaue Positionsmessung des Stringerprofils 2 in Relation zu einem weiteren nicht gezeigten Bauteil ermöglicht.

Grundsätzlich können die Positionierhilfen 10,11 jede denkbare Oberflächengeometrie aufweisen, solange der Reflektor hinterschneidungsfrei und vor allem im Idealfall spielfrei auf die Positionierhilfen 10,11 aufbringbar ist. Da die Positionierhilfen 10,11 lediglich mit der Harzmatrix des Stringerprofils 2 hergestellt sind, lassen sich diese nach erfolgter Positionierung mittels des Lasertrackers beispielsweise durch Abschleifen, Abschneiden, Abschaben, Abfräsen, Abraspeln oder Abscheren im Bereich einer Sollbruchstelle schnell und rückstandsfrei vom Stringerprofil 2 entfernen. Abweichend von der gezeigten Anordnung der Positionierhilfen 10,11 auf der Mittellinie 9 können diese Positionierhilfen 10,11 an beliebigen Stellen auf dem Mittelabschnitt 3, im Bereich der Seitenflächen 5,6 und/oder im Bereich der Flansche 7,8 auf dem Stringerprofil 2 angeordnet sein, solange die genauen Raumkoordinaten der Position der Positionierhilfen 10,11 bestimmbar sind. Diese Raumkoordinaten sind in aller Regel aus den CAD-Geometriedaten der zur Herstellung des Stringerprofils 2 benutzten Formwerkzeuge mit hoher Genauigkeit ableitbar.

Die **Fig. 2** zeigt eine vergrößerte perspektivische Ansicht des Strukturelements 1 bzw. des Ω-Stringerprofils 2 mit der zylindrischen Positionierhilfe 10 aus der Fig. 1. Auf die Positionierhilfe 10 ist ein Reflektor 12 als ein Ziel (s.g. "Target") für ein Lasermesssystem aufgesteckt. Zusätzlich kann die Positionierhilfe 10 eine Klemm- und/oder (Auf-)Rastvorrichtung aufweisen, um einen festen Sitz des Reflektors 12 auch über Kopf zu gewährleisten. Die Klemm- und/oder (Auf-)Rastvorrichtung ermöglicht nach der Beendigung des Einmessvorgangs das Ablösen des Reflektors 12 von der Positionierhilfe 10. Die (Auf-)Rastvorrichtung kann zum Beispiel mit einer federbelasteten Kugel im Bereich der Positionierhilfe 10 gebildet sein, die in eine korrespondierend ausgestaltete Ausnehmung des Reflektors 12 zumindest bereichsweise formschlüssig einbringbar ist. Der Reflektor 12 umfasst unter anderem eine Halterung 13 mit einer Kugel 14, wobei die Halterung 13 unterseitig eine Ausnehmung 15 aufweist, die zumindest bereichsweise formschlüssig auf die zylindrische Positionierhilfe 10 aufsteckbar bzw. mit dieser verbindbar ist, um zeitweilig eine weitgehend spielfreie mechanische Verbindung herzustellen. Darüber hinaus verfügt die Halterung 13 im Bereich einer Oberseite über eine leicht konkave bzw. kalottenförmige Vertiefung 16, in der die Kugel 14 gleichfalls im Idealfall spielfrei aufgenommen ist. Innerhalb der Kugel 14 befindet sich ein Prismenspiegel 17, der mit einem Laserstrahl 18 interagiert bzw. wechselwirkt, der von einem als Lasermesssystem dienenden Lasertracker 19 emittiert wird.

Bei dem Reflektor 12 bzw. dem Ziel für den Lasertracker 19 handelt es sich - einschließlich der darin enthaltenen Komponenten - um Standardbauteile aus der Messtechnik, die zum Beispiel von den Firmen Leica-Geosystems^{®}, Faro^{®} oder der Fa. API^{®} Automated Precision Deutschland GmbH zur Verfügung gestellt werden. Aus der Wechselwirkung des Laserstrahls 18 mit dem Prismenspiegel 17 bzw. der Kugel 14 vermag der Lasertracker 19 eine hoch präzise räumliche Positionsangabe 20 des Prismenspiegels 17 im Reflektor 12 und damit des Stringerprofils 2 an dieser Position in Relation zum umgebenden Raum bzw. zu einem Bauteil 21 zu bestimmen. Bei diesem Bauteil 21 kann es sich beispielsweise um ein Hautfeld eines mittels des Stringerprofils 2 zu verstärkenden Schalenbauteils handeln. Die Positionsangabe 20 kann zum Beispiel in kartesischen Koordinaten mit einer Genauigkeit von bis zu 1/500 mm erfolgen. Grundsätzlich kann auf den beiden Positionierhilfen 10,11 jeder für den Betrieb mit dem Lasertracker 19 geeignete optische Reflektor 12 zeitweise befestigt werden, der in der Lage ist, mit dem Lasertracker 19 in Wechselwirkung zu treten, um die Positionsangabe 20 zu erzeugen und der spielfrei auf den Positionierhilfen 10,11 aufbringbar ist. In diesen Fällen ist die Halterung 13 (Adapter) bzw. die Kugel 14 nicht zwingend erforderlich. Weiterhin können beliebige Strukturelemente innerhalb einer Rumpfzellenstruktur eines Flugzeugs, wie zum Beispiel Spantsegmente, Querträger, Längsträger, Anbindungswinkel, Stützwinkel, Spantkämme oder Stabilisierungswinkel mit den erfindungsgemäßen Positionierhilfen 10,11 versehen und anschließend eingemessen werden. Die erfindungsgemäß an den Strukturelementen ausgebildeten Positionierhilfen 10,11 erlauben eine vollständige Vermessung einer ganzen Rumpfsektion einer Flugzeugrumpfzelle, wodurch etwaige Abweichungen von vorgegebenen Fertigungstoleranzen mit hoher Genauigkeit und mit geringem Arbeitsaufwand detektierbar sind.

Nach der erfolgten Ausrichtung des Stringerprofils 2 und dem anschließenden Aushärten des Bauteils 21 im Autoklaven wird das Bauteil 21 mit Hilfe der Positioniervorrichtung vermessen und danach der Reflektor 12 entfernt. Da die erfindungsgemäßen Positionierhilfen 10,11 sehr klein bzw. kleinvolumig ausgelegt werden können, ist nicht zu erwarten, dass sie zu Beschädigungen des Vakuumsacks bzw. der Vakuumfolie führen. Die Positionierhilfen 10,11 können, wie vorstehend bereits erläutert, mechanisch abgetragen werden oder für nachfolgende Vermessungstätigkeiten am Bauteil verbleiben.

Somit lässt sich die räumliche Position des erfindungsgemäß mit mindestens einer Positionierhilfe 10,11 versehenen Stringerprofils 2 in Relation zum Bauteil 21 mit hoher Genauigkeit und sicher reproduzierbar bestimmen. Hierdurch wird die Ausrichtung bzw. die Positionierung des Stringerprofils 2 erheblich vereinfacht.

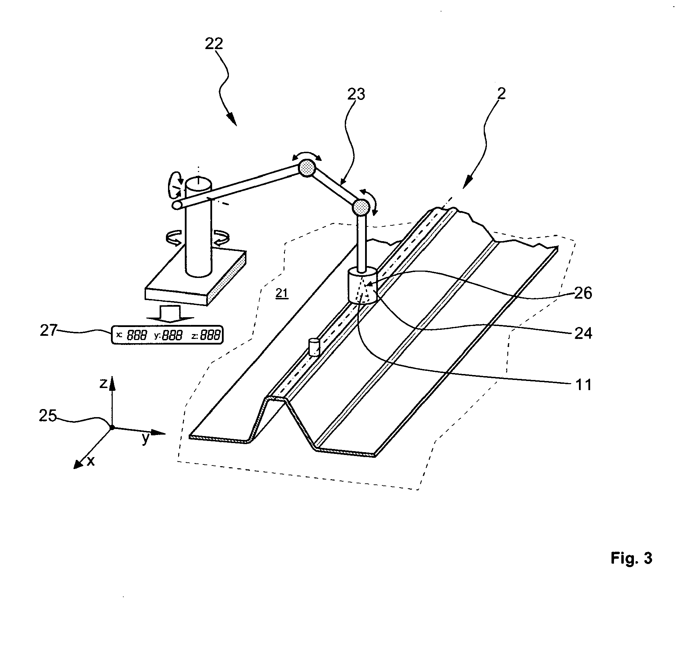

Die Fig. 3 zeigt das auf dem Bauteil 21 angeordnete Stringerprofil 2 nach Fig. 2 bei einer Positionsbestimmung mittels eines vereinfacht dargestellten taktilen Messsystems.

Das taktile Messsystem 22 verfügt über einen Messarm 23, der einen endseitig am Messarm 23 angeordneten Messadapter 24 aufweist. Der Messadapter 24 ist, wie durch die schwarzen und weißen Richtungspfeile angedeutet, frei im Raum, unter anderem parallel zur x-Achse, y-Achse und z-Achse eines Koordinatensystems 25 positionierbar. Zu diesem Zweck verfügt der Messarm 23 über eine Vielzahl von geraden Armabschnitten, die gelenkig miteinander verbunden sind. In der Regel verfügt der Messarm 23 über mindestens sechs Freiheitsgrade. In den Gelenkstellen befinden sich Wegaufnehmer, beispielsweise nicht dargestellte optische Drehwinkelgeber, um die räumliche Position des Messsadapters 24 in Relation zum Koordinatensystem 25 mit hoher Genauigkeit erfassen zu können.

Zur Ermittlung der relativen Position des Ω-Stringerprofils 2 in Relation zum Koordinatensystem 25 und damit auch in Bezug auf das Bauteil 21, wird der Adapter 24 mittels des Messarms 23 so im Raum ausgerichtet, dass der Messadapter 24 in einen zumindest bereichsweisen Formschluss mit der hinteren, auf dem Ω-Stringerprofil 2 ausgebildeten, kegelförmigen Positionierhilfe 11 kommt. Zu diesem Zweck verfügt der zylindrische Messadapter 24 unterseitig über eine hohlkegelförmige Ausnehmung 26, die korrespondierend (zumindest bereichsweise formschlüssig) zur kegelförmigen Oberflächengeometrie der Positionierhilfe 11 ausgestaltet ist. Alternativ kann auch die vordere, zylindrische Positionierhilfe 10 angefahren werden, sofern der Messadapter 24 unterseitig über eine entsprechend ausgebildete Ausnehmung verfügt, die temporär eine zumindest bereichsweise formschlüssige Verbindung mit dem Messadapter 24 ermöglicht.

Die auf diese Weise ermittelte Raumposition des Messadapters 24 wird innerhalb des taktilen Messsystems durch die Wegaufnehmer mit hoher Genauigkeit erfasst, digitalisiert und anschließend in eine Positionsangabe 27 umgewandelt. Die Positionsangabe 27 gibt die relative Position des Ω-Stringerprofils 2 in Bezug auf das Koordinatensystem 25 in geeigneten Koordinaten, wie zum Beispiel in kartesischen, zylindrischen oder polaren Koordinaten an.

Der Einsatz des taktilen Messsystems 22 ermöglicht im Vergleich zu einem Lasermesssystem, insbesondere einem Lasertracker, zwar keine berührungslose Messung, jedoch eine deutlich verbesserte Messgenauigkeit bei größeren Entfernungen zum Messobjekt und/oder großformatigen Messobjekten. Denn die Messunsicherheit eines Lasertrackers steigt mit zunehmendem Abstand zwischen dem Lasertracker und dem Reflektor erheblich an. Bei einer Entfernung von zum Beispiel 30 m zwischen dem Lasertracker und dem Reflektor, ist mit einem Lasertracker in der Regel nur noch eine Messgenauigkeit in der Größenordnung von etwa 0,1 mm erreichbar.

Anstelle des in Fig. 3 exemplarisch dargestellten taktilen Messsystems 22 mit einem viele Freiheitsgrade umfassenden Messarm 23 zur Führung des Messadapters 24, kann der Messadapter 24 auch an einer die einzumessenden Bauteile überlaufenden Portalanordnung geführt sein, um insbesondere bei großformatigen Bauteilen die Messunsicherheit zu verringern. Die Portalanordnung kann auf zwei, beidseitig von den zu vermessenden Bauteilen angeordneten, parallel zueinander verlaufenden Schienen verschiebbar gelagert sein.

### Bezugszeichenliste

- 1: Strukturelement
- 2: Ω-Stringerprofil
- 3: Mittelabschnitt

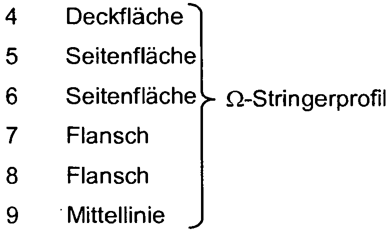

- 10: Positionierhilfe
- 11: Positionierhilfe
- 12: Reflektor
- 13: Halterung
- 14: Kugel
- 15: Ausnehmung
- 16: Vertiefung
- 17: Prismenspiegel
- 18: Laserstrahl
- 19: Lasertracker
- 20: Positionsangabe (Ω-Stringerprofil)
- 21: Bauteil
- 22: taktiles Messsystem
- 23: Messarm
- 24: Messadapter
- 25: Koordinatensystem
- 26: Ausnehmung (Messadapter)
- 27: Positionsangabe (Ω-Stringerprofil)

## Patentansprüche

1. Strukturelement (1) für eine Rumpfzellenstruktur eines Flugzeugs, insbesondere ein Stringerprofil (2) oder ein Ringspantsegment, wobei das Strukturelement (1) mit einem Verbundmaterial, insbesondere mit einem kohlefaserverstärkten Epoxidharz, gebildet ist, wobei das Strukturelement (1) mindestens eine Positionierhilfe (10,11) zur Positionsbestimmung mit einem Messsystem aufweist, **dadurch gekennzeichnet, dass** die mindestens eine Positionierhilfe (10,11) als integraler Teil zum Strukturelement (1) ausgebildet ist.

2. Strukturelement (1) nach Patentanspruch 1, **dadurch gekennzeichnet, dass** das Messsystem ein Lasermesssystem und/oder ein taktiles Messsystem (22) ist.

3. Strukturelement (1) nach Patentanspruch 1 oder 2, **dadurch gekennzeichnet, dass** die Positiönierhilfe (10,11) mit einem Ziel, insbesondere mit einem Reflektor (12), zur Positionsbestimmung mit dem Lasermesssystem verbindbar ist.

4. Strukturelement (1) nach einem der Patentansprüche 1 bis 3, **dadurch gekennzeichnet, dass** die mindestens eine Positionierhilfe (10,11) an einer räumlich definierten Position am Strukturelement (1) ausgebildet ist.

5. Strukturelemente (1) nach einem der Patentansprüche 1 bis 4, **dadurch gekennzeichnet, dass** die mindestens eine Positionierhilfe (10,11) mechanisch, insbesondere durch Abschleifen, Abraspeln, Abfräsen, Abbrechen, Abschneiden oder eine beliebige Kombination hiervon, vom Strukturelement (1) entfernbar ist.

6. Strukturelement (1) nach einem der Patentansprüche 1 bis 5, **dadurch gekennzeichnet, dass** das Lasermesssystem insbesondere ein Lasertracker (19) ist.

7. Strukturelement (1) nach einem der Patentansprüche 1 bis 6, **dadurch gekennzeichnet, dass** die Positionierhilfe oder die Positionierhilfen (10,11) eine derartige Formgebung aufweisen, die ein zumindest bereichsweise formschlüssiges und im Wesentlichen spielfreies Anordnen eines Reflektors (12) als Ziel erlauben.

8. Strukturelement (1) nach Patentanspruch 7, **dadurch gekennzeichnet, dass** die mindestens eine Positionierhilfe (10,11) insbesondere die Gestalt eines Zylinders, eines Kegels, einer Pyramide oder eines Kegelstumpfes aufweist und bevorzugt mit einem Matrixmaterial des Strukturelements (1), insbesondere mit einem Epoxidharz, gebildet ist.

9. Strukturelement (1) nach einem der Patentansprüche 1 bis 8, **dadurch gekennzeichnet, dass** der Reflektor (12) ein Spiegel, insbesondere ein Prismenspiegel (17) ist, der in einer Halterung (13) aufgenommen ist, wobei die Halterung (13) auf die Positionierhilfe (10,11) zumindest bereichsweise formschlüssig aufsteckbar ist.

10. Strukturelement (1) nach einem der Patentansprüche 1 bis 9, **dadurch gekennzeichnet, dass** mittels des Lasermesssystems eine räumliche Position zwischen dem Strukturelement (1) und einem weiteren Bauteil (21), insbesondere einem Schalensegment und/oder einem Koordinatensystem eines dreidimensionalen Raumes, ermittelbar ist.

## Claims

1. Structural element (1) for a fuselage cell structure of an aircraft, in particular a stringer profile (2) or an annular former segment, the structural element (1) being formed using a composite material, in particular using a carbon fibre reinforced epoxy resin, the structural element (1) comprising at least one positioning aid (10, 11) for position determination using a measuring system, **characterised in that** the at least one positioning aid (10, 11) is formed as an integral part with the structural element (1).

2. Structural element (1) according to claim 1, **characterised in that** the measuring system is a laser measuring system and/or a tactile measuring system (22).

3. Structural element (1) according to either claim 1 or claim 2, **characterised in that** the positioning aid (10, 11) can be connected to a target, in particular to a reflector (12), for position determination using the laser measuring system.

4. Structural element (1) according to any one of claims 1 to 3, **characterised in that** the at least one positioning aid (10, 11) is formed at a position, defined in three dimensions, on the structural element (1).

5. Structural element (1) according to any one of claims 1 to 4, **characterised in that** the at least one positioning aid (10, 11) can be removed from the structural element (1) mechanically, in particular by grinding off, grating off, milling off, breaking off, cutting off, or any desired combination thereof.

6. Structural element (1) according to any one of claims 1 to 5, **characterised in that** the laser measuring system is in particular a laser tracker (19).

7. Structural element (1) according to any one of claims 1 to 6, **characterised in that** the positioning aid or the positioning aids (10, 11) are of a shaping which makes it possible to arrange a reflector (12), in a positive fit at least in regions and substantially without play, as a target.

8. Structural element (1) according to claim 7, **characterised in that** the at least one positioning aid (10, 11) is in the form in particular of a cylinder, a cone, a pyramid or a frustum, and is preferably formed using a matrix material of the structural element (1), in particular using an epoxy resin.

9. Structural element (1) according to any one of claims 1 to 8, **characterised in that** the reflector (12) is a mirror, in particular a prismatic mirror (17), which is received in a mounting (13), it being possible to attach the mounting (13) to the positioning aid (10, 11), in a positive fit at least in regions.

10. Structural element (1) according to any one of claims 1 to 9, **characterised in that** a three-dimensional position between the structural element (1) and a further component (21), in particular a shell segment and/or a coordinate system of a three-dimensional space, can be determined by means of the laser measuring system.

## Revendications

1. Elément de structure (1) destiné à une structure de fuselage d'un avion, en particulier une lisse (2) ou un segment raidisseur annulaire, l'élément de structure (1) étant réalisé en matériau composite notamment en résine époxy renforcée par des fibres de carbone, l'élément de structure (1) comportant au moins une aide au positionnement (10, 11) destinée à déterminer une position avec un système de mesure, **caractérisé par le fait que** l'au moins une aide au positionnement (10, 11) est formée en tant que partie intégrante de l'élément de structure (1).

2. Elément de structure (1) selon la revendication 1, **caractérisé par le fait que** le système de mesure est un système de mesure laser et/ou un système de mesure tactile (22).

3. Elément de structure (1) selon la revendication 1 ou 2, **caractérisé par le fait que** l'aide au positionnement (10, 11) peut être raccordée avec une cible, en particulier avec un réflecteur (12), pour la détermination de position avec le système de mesure laser.

4. Elément de structure (1) selon l'une des revendications 1 à 3, **caractérisé par le fait que** l'au moins une aide au positionnement (10, 11) est formée au niveau d'une position définie dans l'espace sur l'élément de structure (1).

5. Elément de structure (1) selon l'une des revendications 1 à 4, **caractérisé par le fait que** l'au moins une aide au positionnement (10, 11) peut être retirée mécaniquement de l'élément de structure (1), en particulier par abrasion, râpage, fraisage, épointage, découpage ou leur quelconque combinaison.

6. Elément de structure (1) selon l'une des revendications 1 à 5, **caractérisé par le fait que** le système de mesure laser est en particulier un dispositif de poursuite laser (19).

7. Elément de structure (1) selon l'une des revendications 1 à 6, **caractérisé par le fait que** l'aide ou les aides au positionnement (10, 11) présentent une forme telle qu'ils permettent une disposition, au moins par endroits par complémentarité de forme et essentiellement sans jeu, d'un réflecteur (12) comme cible.

8. Elément de structure (1) selon la revendication 7, **caractérisé par le fait que** l'au moins une aide au positionnement (10, 11) présente en particulier la forme d'un cylindre, d'un cône, d'une pyramide ou d'un cône tronqué et est formée préférentiellement avec un matériau matriciel de l'élément de structure (1), en particulier avec une résine époxy.

9. Elément de structure (1) selon l'une des revendications 1 à 8, **caractérisé par le fait que** le réflecteur (12) est un miroir, en particulier un miroir prismatique (17), qui est reçu dans un support (13), le support (13) pouvant être emboîté au moins par endroits par complémentarité de forme sur l'aide au positionnement (10, 11).

10. Elément de structure (1) selon l'une des revendications 1 à 9, **caractérisé par le fait que**, au moyen du système de mesure laser, une position dans l'espace peut être déterminée entre l'élément de structure (1) et un autre composant (21), en particulier un segment de coque et/ou un système de coordonnées d'un espace tridimensionnel.
